# EUROPEAN PATENT APPLICATION

(11) **EP 3 276 559 A1**
(43) Date of publication of application: **31.01.2018**
(21) Application number: 17176071.3
(22) Date of filing: 14.06.2017
(51) Int. Cl.: G06Q 20/40, G06Q 30/06

(54) **SYSTEM AND METHOD OF IDENTIFYING SUSPICIOUS USER BEHAVIOUR IN A USER'S INTERACTION WITH VARIOUS BANKING SERVICES**

(30) Priority: 29.07.2016 RU 2016131357; 15.02.2017 US 201715433110
(71) Applicant: Kaspersky Lab AO, Moscow 125212 (RU)
(72) Inventor: USTINOV, Mikhail V., 125212 MOSCOW (RU); GOLOVANOV, Dmitry I., 125212 MOSCOW (RU); ERMAKOVICH, Alexander A., 125212 MOSCOW (RU); KOLOTINSKY, Evgeny B., 125212 MOSCOW (RU); KONDRATOV, Vitaly V., 125212 MOSCOW (RU)
(74) Representative: Chimini, Francesco

(57) **Abstract**

Disclosed are system and method for identifying suspicious user behavior during a user's interaction with various banking services. One exemplary method comprises: receiving information relating to user's interaction with two or more banking services from at least two computing devices used by a user for interacting through a user account with each banking service; receiving an identifier of each computing device; determining a model of user behavior based at least on received information and identifers; calculating a probability of fraud based at least on the model of user behavior; determining and forming patterns of suspicious user behavior; and determining whether a current user activity in interacting with at least one banking services is suspicious based at least upon the patterns.

## Description

### Field of Technology

The invention relates generally to the field of cybersecurity and, more specifically, to systems and methods of identifying suspicious user behavior during an interaction with various banking services.

### Background

Currently, the sphere of banking services has expanded significantly. A user (bank customer) may be afforded new ways of interacting with the bank and methods of payment and transfer of funds. A multitude of payment systems, plastic cards, and banking services (the bank services are often called remote banking services) may allow the user to carry out a variety of transactions. Moreover, new technologies of contactless payment, online banking and mobile banking may facilitate monetary operations without the involvement of a plastic card or bank account information.

Moreover, various mechanisms may exist for protecting a user's funds against access by third parties. For example, a PIN code may be used for plastic cards. This PIN needs to be entered on a terminal when paying for a purchase or when performing operations with the card using an automated teller machine. If the card is lost, a third party will not be able to use it, since he does not know the PIN code of the card. When a user is interacting with an operator of a bank's call center, a secret question or a secret word is usually employed to identify the user. A method such as double authentication may frequently be used when a user is working with online banking. After entering the login and password (which may become accessible to third parties) in the browser on the bank site, the bank may send the user a message on his mobile telephone containing, for example, an additional verification code which may be entered in a special field.

However, existing methods of protection may not fully provide security of the user's funds from criminals. There are many complex attacks utilizing vulnerable aspects in the user's interaction with two or more banking services which criminals use to gain access to the user's funds. Such attacks are often known as fraud. Thus, for example, with the use of phishing sites it is possible to obtain the login and password for access to online banking, as well as the secret word (users not versed in computer security often employ the same password or the same verification word). After this, the criminal may call the bank's call center, undergo authentication, and order the issuance of a second card linked to the user's account with delivery to a different address. And then dispose of the user's money however they please. It should be noted that such an attack may not be discovered by analyzing only the activities during the user's interaction with a single banking service.

Existing systems and methods are aimed at increasing the security of user funds and protecting against hacker attacks. However, the known methods may not effectively counter attacks making use of a user's interaction with two or more banking services. In order to identify such attacks, it is necessary to evaluate the behavior (activity) of the user by analyzing the user's interaction with various banking services. When the user's behavior is similar to behavior described by a hacker pattern or scenario, suspicious behavior may be identified, which may indicate hacker activity being peformed in the user's name.

The proposed system and method make it possible to identify cases of hacking based on suspicious user behavior in a user's interaction with various banking services.

### Summary

Disclosed are systems and methods of identifying suspicious user behavior during an interaction with various banking services. In one example, a method for identifying suspicious user behavior during a user's interaction with various banking services, comprising: receiving information relating to the user's interaction with two or more banking services from at least two computing devices used by a user for interacting through at least one user account with each of the two or more banking services; receiving an identifier of each of the at least two computing devices; determining a model of user behavior based at least on received information and identifers; calculating a probability of fraud based at least on the model of user behavior; determining and forming patterns of suspicious user behavior; and determining whether a current user activity in interacting with at least one banking services is suspicious based at least on the patterns.

In another example, the two or more banking services comprise at least two of: an online banking on a bank website, Internet transactions, mobile banking applications, an automated teller machine banking service, a point of sale terminal service, and a call center of a banking service, and the information relating to the user's interaction with the two or more banking services comprise information relating to a user activity in interacting with one of the two or more banking services and parameters associated with a setting of the user activity and each of the at least two computing devices.

In yet another example, determining the model of user behavior based at least on received information and identifers comprises: detecting links among a plurality of user activities performed via the at least two computing devices during the user's interaction with two or more banking services; and in response to detecting the links, determining at least one rule of interaction between each of the at least two computing devices and each of the two or more banking services via the at least one user account.

In another example, the method further comprises constructing at least one graph indicating the links among the plurality of user activities, the at least two computing devices, and the two or more banking services, and the at least one user account; continuing obtaining information relating to new user activities to update the at least one graph; and storing the at least one graph.

In yet another example, calculating the probability of fraud based at least on the model of user behavior comprises: calculating the probability of fraud for each user activity, each computing device, the at least one user account, and the at least one rule of interaction; and storing the calculated probability of fraud in the at least one graph.

In another example, the method further comprises obtaining information relating to fraudulent activities; identifying a set of links in the at least one graph related to the fraudulent activities; and identifying the patterns of suspicious user behavior in response to detecting the probability of fraud for each user activity, each computing device, the at least one user account, or the at least one rule of interaction is greater than a selected threshold value.

In accordance with another example, a system for identifying suspicious user behavior during a user's interaction with various banking services, comprising: at least one processor configured to: receive information relating to the user's interaction with two or more banking services from at least two computing devices used by a user for interacting through at least one user account with each of the two or more banking services; receive an identifier of each of the at least two computing devices; determine a model of user behavior based at least on received information and identifers; calculate a probability of fraud based at least on the model of user behavior; determine and form patterns of suspicious user behavior; and determine whether a current user activity in interacting with at least one banking services is suspicious based at least on the patterns.

### Brief Description of the Drawings

The accompanying drawings, which are incorporated into and constitute a part of this specification, illustrate one or more example aspects of the present disclosure and, together with the detailed description, serve to explain their principles and implementations.
**Fig. 1** shows an exemplary structure of the interaction of a user with banking services.
**Fig. 2** shows an exemplary system for identifying suspicious user behavior during a user's interaction with various banking services.
**Fig. 3** shows am exemplary method of identifying suspicious user behavior during a user's interaction with various banking services.
**Fig. 4** shows an example computer system on which the disclosed systemsn and method can be realized.

### Detailed Description

Example aspects are described herein in the context of a system, method and computer program product for identifying suspicious user behavior during a user's interaction with various banking services. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

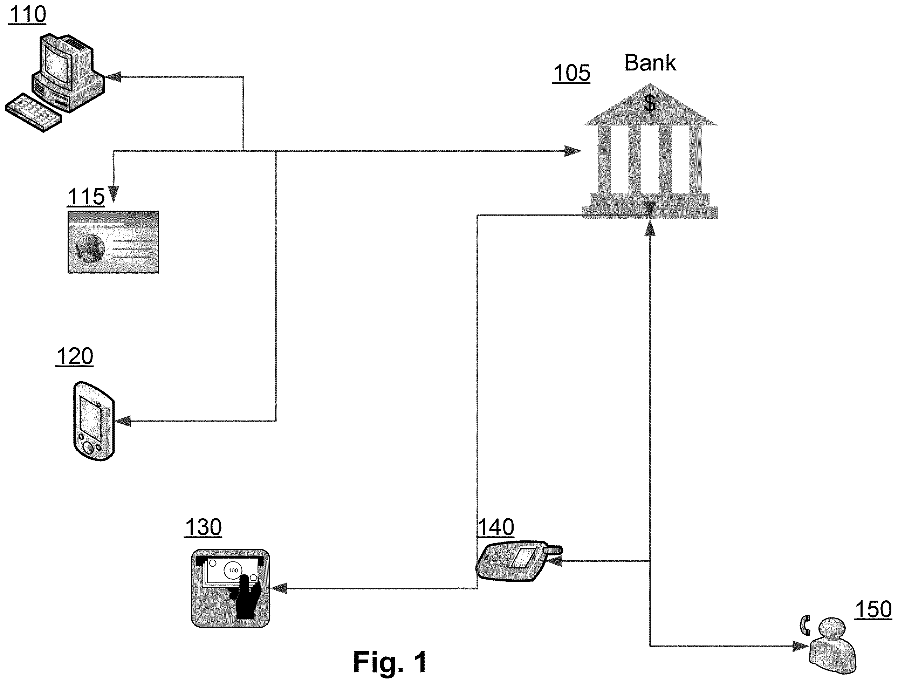

**Fig. 1** shows an exemplary structure of the interaction of a user with banking services. The user's interaction with a bank 105 may occur Using various remote banking services:
- online banking on a bank web site 110;
- Internet transactions (online transaction) 115;
- mobile banking application 120;
- automated teller machine (ATM) 130;
- point of sale terminal (POS-terminal) 140; or
- call center 150 associated with the various remote banking services.

It should be noted that the user's account at the bank is the entity which identifies the user. The user's account may contain his personal data (passport data, email, mobile telephone number, authentication data for online banking). The user's account may be linked to a history of monetary (payments, transfers, purchases) and nonmonetary (changing of personal data, reissuance of a card) operations. In one example, the user's account and its linked history may be stored in a database residing in the IT systems of the bank (for example, on the bank's database server).

It should be noted that it is possible to carry out the very same operations by means of different banking services for the same bank account. For example, personal data may be changed using the online banking 110 in a private office, after calling the call center 150 and subsequent identification of the user, for example, with the use of a secret word, and directly during a visit of the user to a bank branch office. Transfer of funds to another card or account may be carried out using the automated teller machine 130 or online banking 110. Payment for goods and services may be done using the automated teller machine 130, the Internet transaction 115, the mobile application 120, the point of sale terminal 140 or online banking 110. In addition, interaction with certain banking services may occur through intermediaries (for example, it is possible to use an automated teller machine 130 of a bank which did not issue the user's card, payment for goods may be done with the use of a point of sale terminal 140 which may be linked to the bank of a store in which the user may be making a purchase). The user may also have various cards at the very same bank (both debit and credit cards with different terms of use, limits, and rates), and furthermore the user's cards issued at the same bank may use different payment systems (such as Visa or MasterCard).

The described multitude of banking services and operations carried out by the user may result in a multitude of hacker scenarios which may be employed by hackers for unlawful use of a user's bank funds.

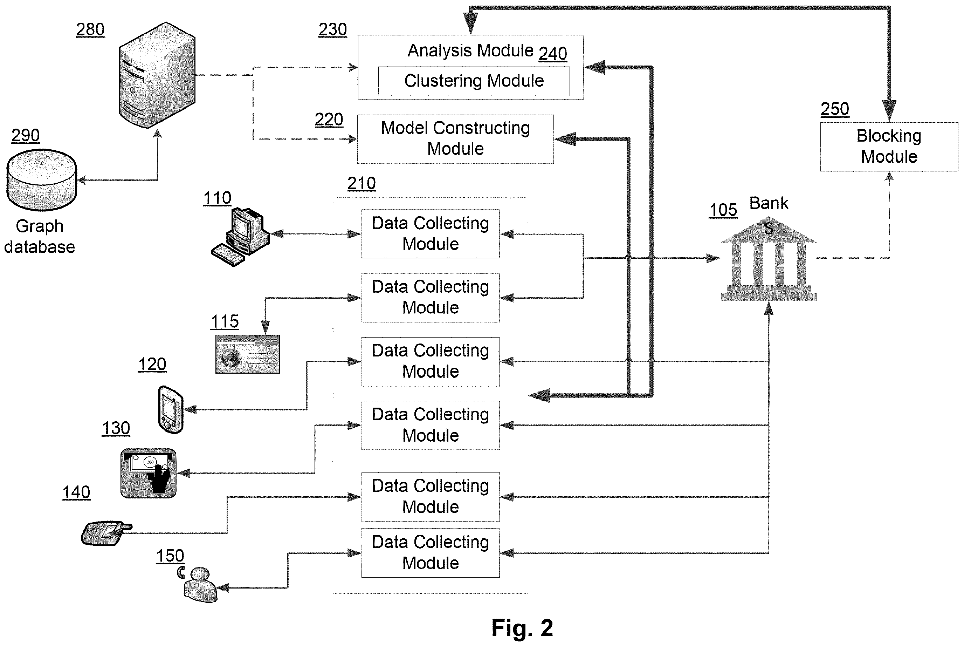

**Fig. 2** shows an exemplary structure of a system for identifying suspicious user behavior during a user's interaction with various banking services.

Using a data collecting module 210, information may be collected regarding the interaction of the user with two or more banking services:
- online banking on a bank web site **110**;
- Internet transactions **115**;
- mobile banking application **120**;
- automated teller machine **130**;
- point of sale terminal **140**; or
- call center **150** associated with the various remote banking services.

In one example, the data collecting module 210 may determine and collect information on user activity and associated with it parameters of the setting. Activity in the general case may include the totality of the user's action and the result of that action, where the event may occur as a result of the user's action, and the action may be carried out with the use of a device during the interaction of the user with an individual banking service.

A device in the context of the present invention may include a program execution environment implemented on a computing device (such as a browser running on a computer, a banking application running on a mobile device, the operating systems of an automated teller machine and point of sale terminal).

The associated parameters of the setting may include the parameters of the activity (for example, the time of the activity, the geolocation of the activity, the attributes of the device used to perform the activity). In one example, the associated parameters of the setting may include the parameters of the user's action. In another example, the associated parameters of the setting may include the parameters of the event. In yet another example, the associated parameters of the setting may include the parameters of the device used during the user activity.

The parameters of the action may include at least one of the following:
- the user's account (or its identifier) at the bank;
- the time of the action;
- the identifier of the action within the bank (in the general case, the identifiers of actions are different in the systems of different banks).

The parameters of the event may generally include:
- the result of the event;
- the user's counterparty;
- the bank of the user's counterparty.

The parameters of the device may include the basic characteristics of the device and the type of its connection to the bank, for example:
- the version of the operating system of the device by means of which the user is interacting with the banking service;
- the browser version;
- the location of the device;
- the type of payment system;
- the type of payment (payment using a PIN, payment using Pay-pass, payment using bank card information, payment using bank account information);
- the identifier of the operating system under whose control the device is working;
- the Google ID or Apple ID identifier;
- whether the device (program execution environment) is operating in the framework of a virtual machine or emulator.

The number of associated parameters of the setting may not be limited and may depend on the realization of the present system. Any information collected by the data collecting module 210 and defining a parameter of the setting may be used by the present system .

The data collecting module 210 may run on a separate computer device, via which a user may interact with an individual banking service.

A user in his interaction with banking services may employ his account or individual attributes linked to it (login, account number, card number, telephone number, address). Depending on the bank and the complexity of its information systems, the account attributes and the activities available to the user when interacting with the bank may be similar in the general case, but different in the number and the ability to access certain attributes by means of a particular individual banking service (for example, the issuance of an additional card at banks of the same group may be possible after logging in to online banking 110, at banks of another group after calling the call center 150, and at banks of a third group only after a personal visit to a bank office).

With the use of an individual banking service, a limited set of actions (activities) with a limited set of attributes may be possible (for example, it may not be possible to change user data using the point of sale terminal 140, and it may not be possible to make a payment by account information using the call center 150).

In one example, the data collecting module 210 may obtain data containing the device parameters using a JavaScript residing on the bank web site. The script may be used to collect data, for example, when the user is working in his private office by means of a browser. In the given case, the script may also carry out functions of detecting "man in the middle" attacks. In yet another example, the data collecting module 210 may obtain information about the device using an application programming interface (API), provided by a mobile software development kit (Mobile SDK). Thus, information about the device may be obtained by using a mobile banking application on the user's smartphone. In yet another , the data collecting module 210 may obtain information with the help of a browser extension when the user is making payments on the Internet, the browser extension being, for example, a component of a security application (antivirus application). In one example, the data collecting module210 may be a component of the software under which the automated teller machine 130 is running, and the data collecting module 210 may collect data about the user's behavior (for example, the user's response time in entering a PIN code, the speed of entering the PIN code) and obtain an image from the camera built into the automated teller machine 130. In one example, the automated teller machine may be equipped with biometric systems (such as a fingerprint scanner or camera), data from which (for example, the user's photograph or data containing a description of the user's fingerprint) may also be obtained by the data collecting module 210.

Using the mentioned aspects, the data collecting module 210 may calculate the "fingerprint" of the device. The print may include a device identifier calculated to identify (distinguish from others) the device in question. In one example, the print may include a function of the device parameters (for example, the hash sum calculated from the device parameters). In some examples, the print may contain a device identifier, which may include a number, a string, a set of numbers/strings or some other data structure.

The collected information may be transmitted to a model constructing module 220 and an analysis module 230.

The model constructing module 220 may be implemented on a remote server 280 or within a cloud service. The model constructing module 220, using the information collected by the data collecting module 210 on the user's interaction with at least two banking services may detect links between the user's activities. For example, the links of the activities may be detected by the model constructing module 220 within a single bank account of the user. Furthermore, the model constructing module 220 may detect links of the activities of different bank accounts of the users. Such a link may include, for example, the use of a single device by several users. Yet another example of such a link may be the payment purpose. For example, if user A and user B are paying for the same telephone number.

From the links detected, the model constructing module 220 may create a model of the user's behavior. The behavior model may be used to specify both an individual user and a group of users. The model may be constructed based at least on the identifiers of the devices and accounts of the users that were used to perform the activities, as provided by the data collecting module 210. A model may be a graph of entities and links between them. Entities may comprise the graph vertices, and according to aspects of the invention, the entities may include the devices and accounts of the users. The links of the graph may include the set of rules of interaction, a rule of interaction between devices and banking services through a user's account being a script describing a set of user actions. For example, the rule of interaction may be determined with the help of conditions based on the associated parameters of the setting.

It should be noted that each activity (event and its result) on which information is collected by the data collecting module 210 and transmitted to the model constructing module 220 may be linked to at least one entity.

The links between entities may reflect a joint or successive use of different vertices (for example, the users may be using different devices with different frequency). The links between entities may have a one-to-many and a many-to-many relation.

For example, the model may include a set of rules, a neural net (or group of neural nets), one or more trees or a forest, or another composition described by the entities (in a particular instance, vertices) and the links between them (in a particular instance, functions).

The rules of interaction between entities (links) may be specified in a text form, in the form of statistical information (statistical model with parameters), decision trees, or a neural net.

In the process of its working, the model constructing module 220 may accumulate information obtained from the data collecting module 210. The graph in this case may be constructed on the basis of the accumulated information on the activities of the user. Each activity of the user reflected in the model may be represented as a path in the graph (a transition from one vertex to another) between entities. The path may not be limited to two vertices.

In one example, the graph may be partly reorganized, for example, upon obtaining each new activity of the user. In another example, the graph may be completely reorganized. In yet another example, the graph may be entirely or partly rearranged by the model constructing module 220 after accumulating a specified number of activities (for example, 10000). It should be noted that banking IT systems are heavily loaded systems. The number of activities from all bank users may be quite volumious (it may reach several thousand activities per second). Therefore, the rearrangement of the graph in each step may cause a slowdown of the bank IT systems, as it may use a substantial number of the computing resources.

In one example, graph databases 290 (known from the prior art) may be used to store the model.

In the general case, the construction of the model may be commenced at once by the model constructing module 220, from the first activities of the user obtained from the data collecting module 210. In one example, the construction of the model may begin after a time interval (several weeks or months). The model may be considered to be constructed if it has a set of activities containing at least two activities of the user's interaction via his account with at least two different banking services. The constructed model may be available to the analysis module 230.

In one example, when an activity may occur which may be already present in the graph, the probability of this activity may be increased, that is, the probability of joint use of the entities with which the occurring event is linked may be increased.

In one example, the graph after being constructed may not contain paths indicating hacker activities. In another example, the graph may contain paths indicating hacker activity which may be detected at different banks (for example, activity in which the use of the device and payments by the user's card occur at places geographically far removed from each other). Thus, accumulated data (such as existing behavior patterns) for a specific bank may be used afterwards to supplement the bank model, and may also be later used in the models of other banks.

In one example, for each past activity of the user, each account of the user and each device, the model constructing module 220 may calculate the probability of fraud (in a general case, from 0 to 1). For example, if fraudulent activity may be repeatedly identified by information from the bank for the user's account, the account of that user may have a high probability of fraud (for example, over 0.6). If activity is occurring with identical (concurring) associated parameters of the setting, such as payment for the same mobile telephone number, from different devices by different cards, and there is corroborated information on fraud from the bank for payment activities of this mobile telephone number, such activity (the next payment for this mobile telephone number) will also have a high probability of fraud. In one example, for each rule of interaction between a device and a banking service the model constructing module 220 may also calculate the probability of fraud. For example, the use of a virtual machine (associated parameter of the setting which describes the device) in certain instances may increase the probability of fraud during the user's interaction with a banking service. The use of so-called "odd devices" likewise often may increase the probability of fraud. An example of such a device may involve the joint use of Internet Explorer 6 and Windows 10. In one example, all calculated probabilities of fraud may be stored in a graph.

In the general case, the model constructing module 220 may likewise obtain information on confirmed fraud (for example, the customer may have reported a case of fraud in person to the bank, and the bank 105 in turn may have informed the present system). In one example, the bank 105 may provide the identifier of the entity, using which the model constructing module 220 may discover in the graph the entity and the links related to fraud. The model constructing module 220 may draw up a set of links related to fraud. In one example, the model constructing module 220 may determine which entities may have been connected with this instance of fraud by using the associated parameters of the setting. For example, if the fraud occurred during an online session of the user, the counterparty may be determined (for example, another user), and a set of entities related to him (to the other user). If the fraud occurred with the use of a bank card, the set of links may be determined between the point of sale terminal and the group of users using it, for example.

In one example, "If" rules may be added to links between entities when fraudulent activities may be added to the model. In one example, these rules may be based on the associated parameters of the setting. For example, if the payment occurs from a terminal compromised by fraudulent activity (an entity contained in a path reflecting fraudulent activity in the graph), then that transaction (activity) may be determined to be suspicious, that is, likely fraudulent. If the device has been compromised, everyone using it may be in the risk zone (may potentially become a victim of fraud). It should be noted that a compromised device may be an entity for which the model may contain links whose probability of fraud may be higher than a threshold value.

The analysis module 230 may be implemented on the remote server 280 or in a cloud service. The analysis module 230 during the next activity of the user during an interaction with the banking service may check the probability of fraudulent activity according to the model, basing this on the information provided by the data collecting module 210. In one example, the checking may be done by comparing the activities occurring with the paths of the model's graph. Upon occurrence of an activity, this may be detected by the analysis module 230 in the tree, and then upon occurrence of a following activity the analysis module may move along the paths of the tree. If the tree path has a low probability (the activity is rare) or if it is fraudulent (the activity may correspond to a known fraudulent path in the tree), the analysis module 230 may form an incident. After the forming of the incident, in one example, the bank may be informed via one or more communication channels of the present system with the bank. In another example, at least one action to counter the fraud may be carried out (for example, blocking the user's account). In yet another example, the incident may be transmitted to a blocking module 250.

In one example, the analysis module 230 may form patterns of suspicious (likely fraudulent) behavior. A pattern of suspicious behavior may include a script containing a set of past activities of the user's interaction with at least two different banking services. The set may contain at least one suspicious activity. A suspicious activity in the context of the working of the analysis module 230 may include an activity corresponding to the user's account or device for which a probability of fraud which may be higher than a threshold value has been calculated.

It should be noted that expert data, heuristics, and also models known from the prior art and based on learning (statistical, deep learning and others) may be used for the identification of patterns.

It should also be noted that the identification of patterns may change the rules of interaction of entities in the model for the determination of the probabilities of fraud. In one example, the analysis module 230 may transmit the discovered pattern of suspicious behavior to the model constructing module 220 to change the model.

Furthermore, the patterns may also be formed by the analysis module 230 with no explicit notification of the system by the bank as to the suspicious activity. In one example, the user's account (or group of accounts of users) in the graph may have a probability of fraud (for example, from 0 to 1). The fewer the cases of fraud identified in the user's account, the lower the probability of fraud. In this case, on the basis of abnormal behavior of the user, the probability of that behavior being fraudulent may be determined. Abnormal behavior may include at least one activity whose probability of fraud may be close to (for example, less than 0.05) to probability of fraud. For a transaction occurring from a device which is implemented on a virtual machine (determined based on the parameters of the setting), in one case, the execution of the transaction on the virtual machine may be normal (the user always employs protected payment systems), in another case it may be abnormal (for the first time in 1000 transactions the user may have employed a virtual machine, which may indicate that he has heightened the security of the transaction, or the transaction may be compromised).

In one example, at least two probabilities of fraud in the interaction of the user with at least two banking services may be used to determine abnormal user behavior.

In event of identifying abnormal behavior during an interaction of the user with at least two different banking services, the analysis module 230 may review the mentioned behavior as a candidate for a pattern of suspicious activity. The analysis module 230 may notify the bank. After checking each suspicious activity at the bank, a fraudulent activity confirmed by the bank may be formed (or, on the other hand, an absence of fraudulent activity confirmed by the bank), and the pattern may be transmitted by the analysis module 230 to the model constructing module 220 for rearrangement of the links of the model. In one example, if abnormal behavior is identified, the analysis module 230 may send the information to the blocking module 250.

A clustering module 240 may function as a separate means or as part of the analysis module 230. This identifies a cluster of typical activities which may be different from the majority. A typical activity may include a set of events during an interaction of the user with a banking service, which set may have a similar sequence of links and parameters of the setting. Each cluster may contain activities of the interaction of the user with at least two banking services. In one example, the clustering module identify clusters from the parameters of the setting received from the bank (for example, the security system of the bank may have determined that an attack is being launched on the bank's IT systems). After singling out the cluster, it may be specified by a pattern and transmitted to the analysis module for determination of fraud. Active learning methods may be used to single out the cluster. After singling out the cluster, in one example, it may be transmitted to an analyst (security specialist) for identification of fraudulent activity. In another example, the identified cluster may be transmitted to the bank for analysis.

The blocking module 250 after receiving the incident from the analysis module 230 may block the next activity of the user when interacting with a banking service different from the banking service with which the current activity may have occurred. For example, if a fraudulent activity is discovered through online banking, the banking systems may be notified that the system has discovered fraudulent activity affecting online banking and then, for example, according to a pattern, mobile banking. If a hacker tries to use the mobile application, the system may block this event (for example, the operation of entry in the mobile application will terminate with an error, even if the hacker may enter correct data).

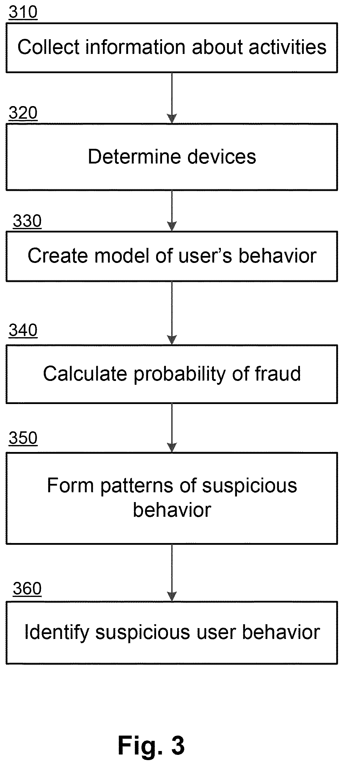

**Fig. 3** shows an exemplary method of identifying suspicious user behavior during a user's interaction with various banking services.

In step 310, the data collectintg module 210 running on the computer devices using which the user is interacting with the banking services may collect information on past activities on the mentioned devices as a result of the interaction of the user through his account with at least two different banking services:
- online banking on the bank web site 110;
- Internet transactions 115;
- mobile banking application 120;
- automated teller machine 130;
- point of sale terminal 140; or
- call center 150.

In step 320, the data collecting module 210 may determine and calculate the identifier of each device being used in the interaction through the user's account with the banking service.

In step 330, the model constructing module 220 running on a remote server or in a cloud service may create a model of the user's behavior on the basis of the collected information on past activities performed on the devices during the interaction of the user with the banking services, and the calculated identifiers of the devices.The model may also contain a set of rules of interaction between the devices and the banking services via the user's account. In one example, the rule of interaction between the devices and the banking services via the user's account may include a script describing a set of actions of the user.

In step 340, the model constructing module 220 may calculate the probability of fraud for each past activity of the user, each account of the user, and each device. In one example, the probability of fraud may also be calculated for each rule of interaction between a device and a banking service.

In step 350, the analysis module 230 running on a remote server or in a cloud service may determine and form patterns of suspicious user behavior, the patterns containing a set of the indicated past activities during the interaction of the user with at least one banking service, and the set containing at least one past suspicious activity, a suspicious activity being one which corresponds to a user account or device for which a probability of fraud greater than a threshold value has been calculated.

In step 360, the analysis module 230 may identify a current user activity occurring as a result of the interaction of the user via his account with at least one banking service as suspicious if the current user activity corresponds to at least one formulated pattern of suspicious user behavior.

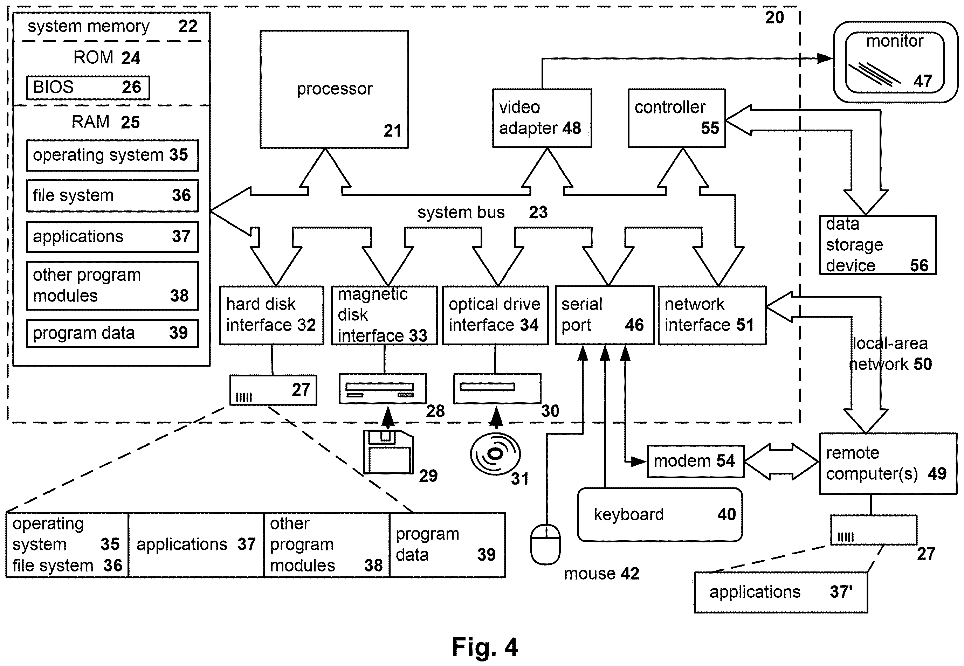

**Fig. 4** is a diagram illustrating a general-purpose computer system on which aspects of systems and methods of the present invention may be implemented. As shown, the computer system 20 (which may be a personal computer or a server) includes a central processing unit 21, a system memory 22 and a system bus 23 connecting the various system components, including the memory associated with the central processing unit 21. As will be appreciated by those of ordinary skill in the art, the system bus 23 may comprise a bus memory or bus memory controller, a peripheral bus, and a local bus that is able to interact with any other bus architecture. The system memory may include permanent memory (ROM) 24 and random-access memory (RAM) 25. The basic input/output system (BIOS) 26 may store the basic procedures for transfer of information between elements of the computer system 20, such as those at the time of loading the operating system with the use of the ROM 24.

The computer system 20, may also comprise a hard disk 27 for reading and writing data, a magnetic disk drive 28 for reading and writing on removable magnetic disks 29, and an optical drive 30 for reading and writing removable optical disks 31, such as CD-ROM, DVD-ROM and other optical media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the computer system 20.

An exemplary aspect comprises a system that uses a hard disk 27, a removable magnetic disk 29 and a removable optical disk 31 connected to the system bus 23 via the controller 55. It will be understood by those of ordinary skill in the art that any type of media 56 that is able to store data in a form readable by a computer (solid state drives, flash memory cards, digital disks, random-access memory (RAM) and so on) may also be utilized.

The computer system 20 has a file system 36, in which the operating system 35, may be stored, as well as additional program applications 37, other program modules 38, and program data 39. A user of the computer system 20 may enter commands and information using keyboard 40, mouse 42, or any other input device known to those of ordinary skill in the art, such as, but not limited to, a microphone, joystick, game controller, scanner, *etc..* Such input devices typically plug into the computer system 20 through a serial port 46, which in turn is connected to the system bus, but those of ordinary skill in the art will appreciate that input devices may be also be connected in other ways, such as, without limitation, via a parallel port, a game port, or a universal serial bus (USB). A monitor 47 or other type of display device may also be connected to the system bus 23 across an interface, such as a video adapter 48. In addition to the monitor 47, the personal computer may be equipped with other peripheral output devices (not shown), such as loudspeakers, a printer, *etc.*

Computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes.

Network connections can form a local-area computer network (LAN) 50 and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the computer system 20 may employ a modem 54 or other modules well known to those of ordinary skill in the art that enable communications with a wide-area computer network such as the Internet. The modem 54, which may be an internal or external device, may be connected to the system bus 23 by a serial port 46. It will be appreciated by those of ordinary skill in the art that said network connections are non-limiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 4, *supra*). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A computer-implemented method for identifying suspicious user behavior during a user's interaction with various banking services, the method comprising:
receiving information relating to the user's interaction with two or more banking services from at least two computing devices used by a user for interacting through at least one user account with each of the two or more banking services;
receiving an identifier of each of the at least two computing devices;
determining a model of user behavior based at least on received information and identifers;
calculating a probability of fraud based at least on the model of user behavior;
determining and forming patterns of suspicious user behavior; and
determining whether a current user activity in interacting with at least one banking services is suspicious based at least on the patterns.

2. The computer-implemented method according to claim 1, wherein the two or more banking services comprise at least two of: an online banking on a bank website, Internet transactions, mobile banking applications, an automated teller machine banking service, a point of sale terminal service, and a call center of a banking service.

3. The computer-implemented method according to any of claims 1 to 2, wherein the information relating to the user's interaction with the two or more banking services comprise information relating to a user activity in interacting with one of the two or more banking services and parameters associated with a setting of the user activity and each of the at least two computing devices.

4. The computer-implemented method according to any of claims 1 to 3, wherein determining the model of user behavior based at least on received information and identifers comprises:
detecting links among a plurality of user activities performed via the at least two computing devices during the user's interaction with two or more banking services; and
in response to detecting the links, determining at least one rule of interaction between each of the at least two computing devices and each of the two or more banking services via the at least one user account.

5. The computer-implemented method according to any of claims 1 to 4, further comprising:
constructing at least one graph indicating the links among the plurality of user activities, the at least two computing devices, and the two or more banking services, and the at least one user account;
continuing obtaining information relating to new user activities to update the at least one graph; and
storing the at least one graph.

6. The computer-implemented method according to any of claims 1 to 5, wherein calculating the probability of fraud based at least on the model of user behavior comprises:
calculating the probability of fraud for each user activity, each computing device, the at least one user account, and the at least one rule of interaction; and
storing the calculated probability of fraud in the at least one graph.

7. The computer-implemented method according to any of claims 1 to 6, further comprising:
obtaining information relating to fraudulent activities;
identifying a set of links in the at least one graph related to the fraudulent activities; and
identifying the patterns of suspicious user behavior in response to detecting the probability of fraud for each user activity, each computing device, the at least one user account, or the at least one rule of interaction is greater than a selected threshold value.

8. A system for identifying suspicious user behavior during a user's interaction with various banking services, comprising:
at least one processor configured to:
receive information relating to the user's interaction with two or more banking services from at least two computing devices used by a user for interacting through at least one user account with each of the two or more banking services;
receive an identifier of each of the at least two computing devices;
determine a model of user behavior based at least on received information and identifers;
calculate a probability of fraud based at least on the model of user behavior;
determine and form patterns of suspicious user behavior; and
determine whether a current user activity in interacting with at least one banking services is suspicious based at least on the patterns.

9. The system according to claim 8, wherein the two or more banking services comprise at least two of: an online banking on a bank website, Internet transactions, mobile banking applications, an automated teller machine banking service, a point of sale terminal service, and a call center of a banking service.

10. The system according to any of claims 8 to 9, wherein the information relating to the user's interaction with the two or more banking services comprise information relating to a user activity in interacting with one of the two or more banking services and parameters associated with a setting of the user activity and each of the at least two computing devices.

11. The system according to any of claims 8 to 10, wherein, to determine the model of user behavior based at least on received information and identifers, the processor is further configured to:
detect links among a plurality of user activities performed via the at least two computing devices during the user's interaction with two or more banking services; and
in response to detecting the links, determine at least one rule of interaction between each of the at least two computing devices and each of the two or more banking services via the at least one user account.

12. The system according to any of claims 8 to 11, wherein the processor is further configured to:
construct at least one graph indicating the links among the plurality of user activities, the at least two computing devices, and the two or more banking services, and the at least one user account;
continue obtaining information relating to new user activities to update the at least one graph; and
store the at least one graph.

13. The system according to any of claims 8 to 12, wherein, to calculate the probability of fraud based at least on the model of user behavior, the processor is configured to:
calculate the probability of fraud for each user activity, each computing device, the at least one user account, and the at least one rule of interaction; and
store the calculated probability of fraud in the at least one graph.

14. The system according to any of claims 8 to 13, wherein the processor is further configured to:
obtain information relating to fraudulent activities;
identify a set of links in the at least one graph related to the fraudulent activities; and
identify the patterns of suspicious user behavior in response to detecting the probability of fraud for each user activity, each computing device, the at least one user account, or the at least one rule of interaction is greater than a selected threshold value.
